# EUROPÄISCHE PATENTSCHRIFT

(11) **EP 0 975 877 B1**
(45) Veröffentlichungstag und Bekanntmachung des Hinweises auf die Patenterteilung: **29.08.2001**
(21) Anmeldenummer: 98922702.0
(22) Anmeldetag: 14.04.1998
(51) Int. Cl.: F16B 25/10

(54) **SELBSTBOHRENDES UND GEWINDEFORMENDES VERBINDUNGSELEMENT**
DRILLING AND THREADING FASTENING
ELEMENT DE FIXATION AUTOPERFORANT ET TARAUDEUR

(30) Priorität: 15.04.1997 DE 29706749 U
(43) Veröffentlichungstag der Anmeldung: 02.02.2000
(73) Patentinhaber: A-Z Ausrüstung und Zubehör GmbH & Co. KG, 45525 Hattingen (DE)
(72) Erfinder: DICKE, Robert, D-58256 Ennepetal (DE)
(74) Vertreter: Zapf, Christoph, Dipl.-Ing.
(86) Internationale Anmeldenummer: EP9802164
(87) Internationale Veröffentlichungsnummer: WO9846891

(56) Entgegenhaltungen:
- WO-A-95/24566
- DE-U- 9 314 006
- US-A- 3 578 762
- US-A- 5 120 172

## Beschreibung

Die vorliegende Erfindung betrifft ein selbstbohrendes und gewindeformendes Verbindungselement, insbesondere eine Schraube, mit einem Gewindeschaft und einer endseitigen Bohrspitze zum spanenden Bohren eines Kernloches für den Gewindeschaft, entsprechend dem ersten Teil des Anspruchs 1. (WO 95/24566).

Es sind derartige Schrauben bekannt, die selbst mit ihrer Bohrspitze spanend ein Kernloch in das jeweilige Material bohren, und in dieses Kernloch wird nachfolgend die Schraube mit dem Gewindeschaft nach Art einer Blechschraube eingeschraubt. Dabei formt sich selbsttätig ein entsprechendes Innengewinde. Dazu ist der Durchmesser des Kernloches in Anpassung an die Ausbildung des Gewindes auf dem Gewindeschaft entsprechend kleiner dimensioniert, damit in dem Kernloch selbsttätig ein Gewinde geformt werden kann.

Der Erfindung liegt die Aufgabe zugrunde, ein derartiges Verbindungselement zu schaffen, bei dem das Bohrverhalten, insbesondere das erste Anbohren, beim Bohren des Kernloches verbessert ist.

Erfindungsgemäß wird dies durch die Merkmale des Anspruchs 1 erreicht. Durch diese erfindungsgemäße Ausgestaltung kann die erste, eine endseitige Bohrspitze aufweisende Bohrstufe bezüglich ihrer Schneidengeometrie speziell für ein gutes Anbohrverhalten ausgelegt werden, während die zweite, sich axial anschließende Bohrstufe zum weitergehenden Aufbohren des Kernloches dient und eine speziell dazu ausgestaltete Schneidengeometrie aufweisen kann. So können insbesondere unterschiedliche Schneidwinkel vorgesehen sein, wobei vorzugsweise der Schneidwinkel der ersten Bohrstufe zur Gewährleistung eines guten Anbohrverhaltens kleiner (spitzer) als der Schneidwinkel der zweiten Bohrstufe ausgebildet sein kann.

Das erfindungsgemäße Verbindungselement eignet sich dadurch auch besonders gut zum direkten Einbohren und Einschrauben in Metall-Blechmaterialien, indem mit der ersten Stufe durch entsprechende Auslegung die in der Regel relativ harte bzw. zähe Blech-Walzhaut zerstört werden kann.

Weitere vorteilhafte Ausgestaltungsmerkmale der Erfindung sind in den Unteransprüchen sowie der folgenden Beschreibung enthalten.

Nun sind Stufenbohrer als solche zwar in der Werkzeugtechnik an sich bekannt, allerdings liegt die Übertragung dieser Maßnahme auf ein gattungsgemäßes Verbindungselement nicht nahe, weil es sich um einen Massenartikel handelt. Der Fachmann wird daher eine solche, auf den ersten Blick ja relativ aufwendige Maßnahme nicht ohne weiteres bei einem Verbindungselement der hier angesprochenen Art anwenden.

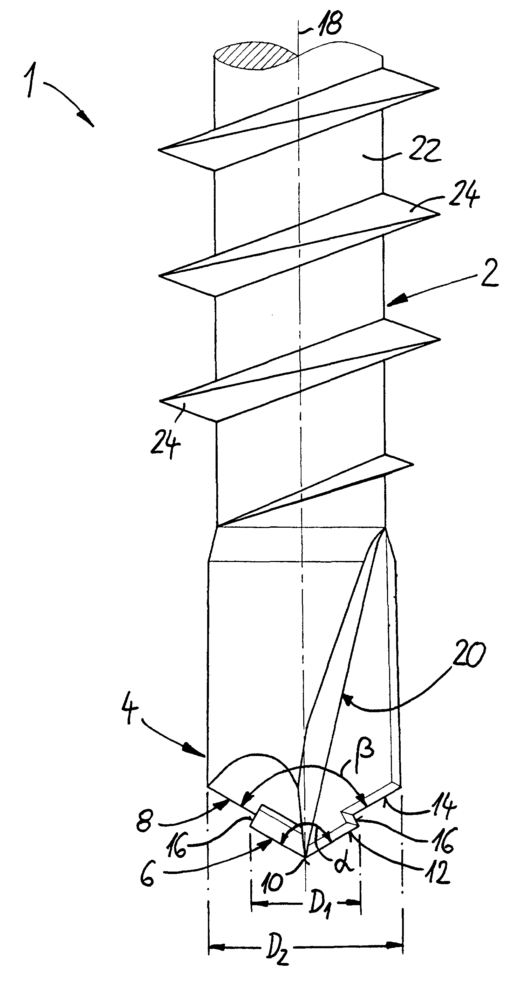

Anhand eines in der Zeichnung dargestellten, bevorzugten Ausführungsbeispiels soll die Erfindung näher erläutert werden. Dabei zeigt die einzige Zeichnungsfigur den spitzenseitigen Endabschnitt eines erfindungsgemäßen Verbindungselementes.

In der Zeichnung ist als Verbindungselement beispielhaft eine Schraube 1 teilweise veranschaulicht, die einen Gewindeschaft 2 und eine endseitige Bohrspitze 4 aufweist. Die Schraube 1 kann zudem anderseitig einen nicht dargestellten Schraubenkopf mit einem beliebigen Schlitz oder dergleichen Angriff für ein Drehwerkzeug aufweisen. Allerdings kann das Verbindungselement beispielsweise auch ohne Kopf als Gewindebolzen oder dergleichen ausgebildet sein.

Erfindungsgemäß ist die Bohrspitze 4 als Stufenbohrer mit mindestens zwei axial hintereinander angeordneten Bohrstufen 6, 8 mit unterschiedlichen Durchmessern D₁, D₂ ausgebildet. Die endseitige, erste Bohrstufe 6 weist eine Anbohrspitze 10 auf.

Jede Bohrstufe 6, 8 besteht aus (mindestens) zwei jeweils einen bestimmten Schneidwinkel α bzw. β definierenden Schneidkanten 12 bzw. 14. Die Schneidkanten 12 der ersten Bohrstufe 6 schließen einen Schneidwinkel α ein, während die Schneidkanten 14 der zweiten Bohrstufe 8 einen Schneidwinkel β definieren. Im dargestellten Ausführungsbeispiel sind die Schneidwinkel α und β etwa gleich groß dimensioniert, jedoch können sie auch unterschiedlich sein. Vorzugsweise ist dann der Schneidwinkel α der ersten Bohrstufe 6 kleiner als der Schneidwinkel β der zweiten Bohrstufe 8.

Die Schneidkanten 12 der ersten Bohrstufe 6 gehen über Übergangskanten 16 in die Schneidkanten 14 der zweiten Bohrstufe 8 über. Dabei verlaufen die Übergangskanten 16 ausgehend von den Schneidkanten 12 der ersten Bohrstufe 6 bevorzugt mit einem bestimmten Hinterschnitt schräg nach innen bis zu den Schneidkanten 14 der zweiten Bohrstufe 8. Somit hat der Bereich der Übergangskanten 16 keine eigene spanende Bohrwirkung.

Im dargestellten Ausführungsbeispiel verlaufen die Übergangskanten 16 etwa senkrecht zu den Schneidkanten 12, 14 der Bohrstufen 6, 8.

Aus der Zeichnung ist ferner erkennbar, daß den Schneidkanten 12, 14 jeweils eine gemeinsame, etwa axial verlaufende Span-Nut 20 in Rotationsrichtung vorgeordnet ist.

Die Schraube 1 besteht zumindest im Bereich der Bohrspitze 4, vorzugsweise aber auch im Bereich des Gewindeschaftes 2, aus einem gehärteten, hoch aufgekohlten Stahl.

Abschließend sei noch erwähnt, daß der Gewindeschaft 2 aus einem im wesentlichen zylindrischen, d.h. im Durchmesser kreisförmigen Schaft 22 besteht, der ein als schraubenlinienförmig verlaufende Erhebung ausgebildetes, ein- oder mehrgängiges Gewinde 24 trägt.

Die Erfindung ist nicht auf die dargestellten und beschriebenen Ausführungsbeispiele beschränkt, sondern umfaßt auch alle im Sinne der Erfindung gleichwirkenden Ausführungen.

## Patentansprüche

1. Selbstbohrendes und gewindeformendes Verbindungselement, insbesondere Schraube (1), mit einem Gewindeschaft (2) und einer endseitigen Bohrspitze (4) zum spanenden Bohren eines Kernloches für den Gewindeschaft (2), wobei die Bohrspitze (4) als Stufenbohrer mit mindestens zwei Bohrstufen (6, 8) mit unterschiedlichen Durchmessern (D₁, D₂) ausgebildet ist und die Schneidkanten (12) der ersten Bohrstufe (6) über Übergangskanten (16) in die Schneidkanten (14) der zweiten Bohrstufe (8) übergehen,
**dadurch gekennzeichnet**, daß die Übergangskanten (16) ausgehend von den Schneidkanten (12) der ersten Bohrstufe (6) mit einem bestimmten Hinterschnitt schräg nach innen bis zu den Schneidkanten (14) der zweiten Bohrstufe (8) verlaufen.

2. Verbindungselement nach Anspruch 1,
**dadurch gekennzeichnet**, daß jede Bohrstufe (6,8) zwei jeweils einen bestimmten Schneidwinkel (α, β) definierende Schneidkanten (12, 14) aufweist, wobei die Schneidwinkel (α, β) gleich oder unterschiedlich sind.

3. Verbindungselement nach Anspruch 1 oder 2,
**dadurch gekennzeichnet**, daß die Übergangskanten (16) etwa senkrecht zu den Schneidkanten (12) der ersten Bohrstufe (6) und/oder zu den Schneidkanten (14) der zweiten Bohrstufe (8) verlaufen.

4. Verbindungselement nach Anspruch 2 oder 3,
**dadurch gekennzeichnet**, daß den Schneidkanten (12, 14) jeweils eine Span-Nut (20) in Rotationsrichtung vorgeordnet ist.

## Claims

1. Self-drilling and thread-forming connecting element, in particular a screw (1), having a threaded shank (2) and a drilling point (4) at the end for the chip-forming drilling of a core hole for the threaded shank (2), the drilling point (4) being designed as a step drill having at least two drilling steps (6, 8) with different diameters (D₁, D₂), and the cutting edges (12) of the first drilling step (6) merging into the cutting edges (14) of the second drilling step (8) via transition edges (16), **characterized in that** the transition edges (16), starting from the cutting edges (12) of the first drilling step (6), run obliquely inwards with a certain. undercut up to the cutting edges (14) of the second drilling step (8).

2. Connecting element according to Claim 1, **characterized in that** each drilling step (6, 8) has two cutting edges (12, 14), which respectively define a certain cutting angle (α, β), the cutting angles (α, β) being the same or different.

3. Connecting element according to Claim 1 or 2, **characterized in that** the transition edges (16) run approximately at right angles to the cutting edges (12) of the first drilling step (6) and/or to the cutting edges (14) of the second drilling step (8).

4. Connecting element according to Claim 2 or 3, **characterized in that** in each case a flute (20) is located in front of the cutting edges (12, 14) in the direction of rotation.

## Revendications

1. Elément d'assemblage autoperceur et autotaraudeur, en particulier vis (1), comprenant une tige filetée (2) et une pointe perceuse terminale (4) destinée à percer un trou de noyau pour la tige filetée (2) par enlèvement de copeaux, la pointe perceuse (4) formant un foret étagé qui comprend au moins deux étages de perçage (6, 8) présentant des diamètres différents (D₁, D₂) et les arêtes de coupe (12) du premier étage de perçage (6) se terminant, avec interposition d'arêtes de transition (16), dans les arêtes de coupe (14) du deuxième étage de perçage (8),
**caractérisé en ce que** les arêtes de transition (16) s'étendent obliquement vers l'intérieur avec une contre-dépouille déterminée, en allant des arêtes de coupe (12) du premier étage de perçage (6) jusqu'aux arêtes de coupe (14) du deuxième étage de perçage (8).

2. Elément d'assemblage selon la revendication 1, **caractérisé en ce que** chaque étage de perçage (8) présente deux arêtes de coupe (12, 14) qui définissent chacune un angle de coupe donné (α, β), les angles de coupe (α, β) étant identiques ou différents.

3. Elément d'assemblage selon la revendication 1 ou 2,
**caractérisé en ce que** les arêtes de transition (16) s'étendent à peu près perpendiculairement aux arêtes de coupe (12) du premier étage de perçage (6) et/ou aux arêtes de coupe (14) du deuxième étage de perçage (8).

4. Elément d'assemblage selon la revendication 2 ou 3,
**caractérisé en ce qu**'une gorge de passage des copeaux (20) est prévue en amont des arêtes de coupe (12, 14), vu dans le sens de 1a rotation.
